Europäisches Patentamt

European Patent Office

Office européen des brevets

(19)

(11) Numéro de publication: **0 251 848 B1**

(12) **FASCICULE DE BREVET EUROPEEN**

(45) Date de publication de fascicule du brevet:
**18.12.91**

(21) Numéro de dépôt: **87401295.8**

(22) Date de dépôt: **10.06.87**

(51) Int. Cl.⁵: **F16D 65/16**, F16D 55/224,
F16D 66/02, B60T 13/68,
B65H 5/00, B60T 1/06,
F16D 69/00

(54) **Système de frein d'immobilisation pour véhicule et étrier de frein pour un tel système.**

(30) Priorité: **23.06.86 FR 8609018**

(43) Date de publication de la demande:
**07.01.88 Bulletin 88/01**

(45) Mention de la délivrance du brevet:
**18.12.91 Bulletin 91/51**

(84) Etats contractants désignés:
**AT BE CH DE ES GB IT LI NL SE**

(56) Documents cités:
EP-A- 0 025 714      EP-A- 0 127 314
DE-A- 3 319 988      FR-A- 2 389 043
FR-A- 2 410 175      GB-A- 2 083 146
US-A- 4 022 300

(73) Titulaire: **SAB WABCO S.A.**
**4, boulevard Westinghouse**
**F-93270 SEVRAN(FR)**

Titulaire: **REGIE AUTONOME DES TRANS-**
**PORTS PARISIENS "RATP"**
**53 ter, Quai des Grands Augustins**
**F-75271 Paris Cédex 06(FR)**

(72) Inventeur: **Grenier, Michel**
**17 rue Clos Richard**
**F-77400 Dampart(FR)**
Inventeur: **de la Gorge, Jean-Etienne**
**72 Quai de la Loire**
**F-75019 Paris(FR)**
Inventeur: **Cieplinski, Daniel**
**20-24 de la Procession**
**93250 Villemomble(FR)**
Inventeur: **Leturgie, Gérard**
**57 rue Pasteur Butry S/Oise**
**F-95430 Auvers sur Oise(FR)**
Inventeur: **Thurin, Yves**
**28 avenue du Piple**
**F-94370 Sucy en Brie(FR)**

Inventeur: **Meret, Laurent**
**37 Avenue Numance Bouel**
**F-91800 Brunoy(FR)**
Inventeur: **Doireau, Christian**
**50 Bd St Marcel**
**F-75005 Paris(FR)**

(74) Mandataire: **Hirsch, Marc-Roger**
**Cabinet Hirsch 34 rue de Bassano**
**F-75008 Paris(FR)**

## Description

La présente invention concerne un système de frein destiné à l'immobilisation d'un véhicule et constitué d'un disque de frein ou autre élément annulaire formant piste de friction, relié cinématiquement à au moins une roue du véhicule et entouré par un étrier de frein qui est actionné par un ensemble vis-écrou et qui chevauche la section radiale du disque en appliquant sur chacune des faces de celui-ci une garniture de friction, l'une des garnitures de friction immobilisée en rotation par rapport au disque et mobile en direction de la piste de friction du disque, étant rendue solidaire d'une tige filetée vissée, par une liaison de filetage irréversible, dans un écrou de commande monté rotatif par l'intermédiaire d'au moins un palier à l'intérieur du corps d'étrier, et un moteur de freinage étant relié mécaniquement à l'écrou de commande pour l'entraîner en rotation dans le sens du serrage des freins. L'invention concerne également un étrier de frein à disque pour ce système de frein d'immobilisation.

Les premiers freins pour véhicule à roues, notamment à l'époque de la traction hippomobile, étaient constitués de semelles appliquées par l'intermédiaire d'un palonnier de freinage sur les bandages des roues d'un essieu du véhicule à l'aide d'un système à manivelle et à vis de serrage transformant à l'aide d'un écrou la rotation de la vis ou de l'écrou en déplacement axial de serrage. La vis qui présentait généralement un filet de section carrée, était cependant irréversible, ce qui garantissait de façon sûre l'immobilisation du véhicule en maintenant à l'arrêt l'effort de freinage appliqué par le conducteur via une timonerie de transmission relativement élastique. La course élastique de serrage du frein permettait non seulement de moduler la puissance de freinage par une rotation plus ou moins grande de la vis mais, en plus, maintenait cet effort à l'arrêt même s'il se produisait de petites variations de longueur des éléments du frein, par exemple à la suite du refroidissement des pistes de freinage.

Lorsque le frein à fluide sous pression a été appliqué à des véhicules automoteurs plus puissants, tels que les trains puis les véhicules automobiles, le frein à fluide qui faisait merveille pour moduler le freinage en fonction des besoins du conducteur, notamment l'air comprimé sur les trains et les véhicules industriels lourds, n'a jamais pu garantir l'immobilisation de longue durée du véhicule. On a ainsi continué d'utiliser le vieux frein manuel d'immobilisation à vis pour les véhicules les plus lourds, comme les locomotives et les wagons ou voitures ferroviaires.

Depuis quelques décennies, afin d'alléger le travail des agents de conduite et de télécommander la fonction de freinage d'immobilisation, on a généralisé l'utilisation des freins à ressort qui ont remplacé les freins à main même dans les applications ferroviaires. Ces freins à ressort paraissent de plus assurer une fonction de sécurité car ils sont généralement desserrés par une pression d'air comprimé qu'il suffit de laisser s'échapper de façon graduée pour déclencher le frein de secours modérable, le frein d'immobilisation étant obtenu par un échappement total de la pression d'air comprimé que l'on est pratiquement sûr d'obtenir. En matière ferroviaire, on a même réalisé des freins de service modérables commandés directement par des ressorts avec échappement de la pression d'air comprimé en fonction de l'effort de freinage souhaité pour le véhicule et de la charge de celui-ci, de manière à obtenir la décélération souhaitée quelle que soit la charge du véhicule, le freinage de parc ou d'immobilisation étant obtenu automatiquement par surcroît en cas d'échappement total de la pression d'air comprimé.

Ces freins à ressort ont grandement facilité le travail du conducteur qui a dès lors pu télécommander le déclenchement du frein d'immobilisation par simple action sur un levier de frein ou un contact électrique de frein de parc. Par contre, des problèmes de déclenchement intempestif du frein de parc, inconnus à l'époque du frein d'immobilisation à actionnement manuel ou "frein à main", se sont manifestés en cas de rupture brutale du flexible d'alimentation en air comprimé de desserrage du frein à ressort. Ces déclenchements intempestifs, sont aggravés généralement par le fait que le conducteur d'un véhicule routier lourd actionne alors les freins de service par réflexe, ce qui conduit dans le cas des véhicules industriels à un blocage des roues sur lesquelles s'applique le frein d'immobilisation et à une sortie de route du véhicule. Pour les véhicules ferroviaires qui sont munis d'un frein de service et d'un frein d'immobilisation connu, le conducteur du train n'est en général pas averti ou est averti trop tard que l'un des freins d'immobilisation de son train s'est déclenché intempestivement et le train roule frein serré sur l'essieu qui a subi un déclenchement du frein à ressort, au risque de détruire les roues de cet essieu. En cas d'actionnement puissant du frein de service, l'addition du frein d'immobilisation à ressort qui persiste longtemps avant l'usure complète des garnitures de friction et du frein de service à la puissance maximale, peut conduire au blocage des roues de cet essieu perturbé et à la formation d'un plat sur les roues.

Le document FR-A-2389043 décrit un frein à disque pour véhicules routiers dans lequel une garniture de friction est rendue solidaire d'une tige filetée par une liaison de filetage irréversible dans un écrou rotatif à l'intérieur d'un corps d'étrier et entrainé par un moteur de freinage axial à fluide sous pression portant une crémaillière. Un tel moteur de freinage assure un bon freinage d'immobilisation mais ne permet pas le desserrage correct du frein d'immobilisation dans certains cas où il se produit un coincement relatif du filetage irréversible actionné dans le sens du desserrage.

L'invention vise à éviter ces inconvénients des freins d'immobilisation à ressort, notamment pour les véhicules ferroviaires destinés à être inclus dans un train, mais également le cas échéant pour les véhicules routiers lourds, tout en permettant la télécommande aisée du serrage et du desserrage du frein d'immobilisation. Le système de frein d'immobilisation selon l'invention doit également garantir la persistance dans le temps de l'effort d'application des garnitures de freinage sur les pistes de freinage, tout en ne requérant qu'une puissance réduite d'application et en réalisant un ensemble compact et peu onéreux.

Le système selon l'invention se propose également de donner par télétransmission une information détaillée et plus fiable que celle obtenue jusque là sur l'état du frein (serrage, desserrage, usure des garnitures) au conducteur, y compris au conducteur d'un train relativement long et même de permettre au train de rouler en sécurité dans le cas où l'un des freins d'immobilisation refuserait de se desserrer, sans qu'il en résulte de dégradation grave pour le système de frein d'immobilisation.

A cet effet le moteur de freinage est placé en position inactive après une opération de serrage des freins et est susceptible d'être actionné dans le sens du desserrage pour provoquer le desserrage des freins, de manière que le serrage se maintienne par l'effet de la liaison de filetage irréversible s'opposant au desserrage aussi longtemps que le moteur de freinage n'a pas été actionné dans le sens du desserrage ou qu'un jeu dû à l'usure n'est pas apparu entre les garnitures de friction et les pistes de friction du disque de frein. Le couple maximal d'entraînement susceptible d'être fourni par le moteur de freinage à l'écrou de commande est nettement supérieur dans le sens du desserrage des freins à celui susceptible d'être fourni dans le sens du serrage des freins, de manière à vaincre un éventuel coincement au desserrage du frein d'immobilisation.

Selon une autre caractéristique du système de frein d'immobilisation selon l'invention, le disque est relié cinématiquement à la roue du véhicule par une transmission non susceptible de glissement et multipliant sa vitesse de rotation, de manière que la vitesse linéaire des pistes de friction du disque soit nettement supérieure à la vitesse de rotation de la roue et que la force d'application des garnitures de frein sur les pistes de friction du disque soit réduite.

Selon un autre mode de réalisation du système de frein selon l'invention, au moins l'une des garnitures de friction est réalisée en un matériau présentant une usure rapide en cas de rotation du disque de frein, pour supprimer ainsi rapidement le couple de freinage du frein d'immobilisation non desserré. Au moins l'une des garnitures de friction peut être réalisée en un matériau tel qu'un élastomère présentant simultanément: une élasticité significative pour conserver l'effort d'application des freins après mise en position inactive du moteur de freinage, un coefficient de friction élevé au moins à l'arrêt de la piste de friction du disque et une capacité d'usure très rapide en cas de rotation du disque de frein de manière à faire disparaître rapidement le couple de freinage du frein d'immobilisation si celui-ci ne peut être desserré.

L'épaisseur des garnitures de friction et la course de serrage disponible, sont normalement suffisantes pour permettre plusieurs opérations de roulage du véhicule frein d'immobilisation serré, jusqu'à la disparition quasi-totale du couple de freinage de ce frein par usure de ces garnitures, avant de devoir procéder à l'échange d'au moins l'une des garnitures de friction.

Selon un autre mode de réalisation du système de frein destiné à l'immobilisation d'un véhicule, le couple de friction maximal qu'il provoque sur le disque de frein est inférieur au couple d'entraînement de ce disque par l'adhérence sur leur chemin de roulement normal de la ou des roue(s) reliée(s) cinématiquement au disque, de manière à permettre le roulement forcé du véhicule en cas d'impossibilité de desserrer le frein.

Selon un autre mode de réalisation du système de frein selon l'invention, l'écrou de commande est relié mécaniquement à des moyens d'actionnement manuels aptes à desserrer et/ou serrer le frein d'immobilisation par rotation manuelle dudit écrou en cas de défaillance du moteur de freinage.

Selon un mode de réalisation particulier du système de frein d'immobilisation, l'écrou de commande est un écrou borgne dont la tête est prolongée du côté opposé à la tige filetée par une queue munie à sa périphérie d'une denture d'engrenage engrenant avec la denture d'une crémaillère reliée par une tige de commande à un piston de serrage et un piston de desserrage délimitant des chambres à pression de fluide pour constituer un vérin de serrage et un vérin de desserrage susceptibles d'entraîner axialement la crémaillère dans le sens produisant respectivement le serrage ou le desserrage, par rotation de l'écrou de commande autour de la tige filetée immobilisée en rotation par la garniture de friction mais libre en translation. La queue de l'écrou borgne est en appui au-delà de la denture d'engrenage dans un premier palier de rotation ménagé dans le corps de l'étrier, tandis que la partie de l'écrou borgne portant le filetage intérieur vissé sur la tige filetée est guidée par sa périphérie dans un deuxième palier de rotation de plus grand diamètre que le premier et ménagé dans le corps de l'étrier, du côté de la garniture de friction solidaire de la tige filetée.

Selon un autre mode de réalisation plus compact, le vérin de serrage et le vérin de desserrage comportent un piston unique mobile dans un alésage et relié à la crémaillère par une tige support traversant de façon étanche un alésage de guidage, le vérin de serrage étant délimité par la face du piston unique attaché à la tige support et le vérin de desserrage étant délimité par l'autre face du piston unique, de manière à réaliser une section de piston de vérin plus importante au desserrage qu'au serrage.

Selon encore un autre mode de réalisation du système de frein d'immobilisation, la crémaillère est solidaire, d'un côté, d'un piston de serrage de petite section et mobile dans un alésage de serrage où il délimite la chambre de serrage du frein et, du côté opposé, d'un piston de desserrage de plus grande section et mobile dans un alésage de desserrage où il délimite une chambre de desserrage du frein. Les alésages de serrage et de desserrage constituent un moyen de guidage de la crémaillère combiné à un palier ménagé entre le piston de desserrage et la partie de la crémaillère munie d'une denture engrenant avec la denture périphérique de l'écrou de commande et les chambres de serrage et de desserrage sont susceptibles d'être reliées respectivement à une source de fluide sous pression et à l'échappement pour réaliser une opération de serrage du frein d'immobilisation et alternativement à l'échappement et à une source de fluide sous pression pour réaliser une opération de desserrage du frein d'immobilisation.

Selon un autre mode de réalisation de l'invention, permettant la télétransmission des informations sur l'état du frein d'immobilisation, le dos de la crémaillère du côté opposé à la denture de cette crémaillère porte au moins un profil de came axial coopérant avec au moins un poussoir de contacteur électrique permettant de télétransmettre des indications sur la course de la crémaillère correspondant notamment au desserrage du frein, à l'application du frein et à l'usure exagérée des garnitures de friction.

Selon un mode de réalisation particulièrement compact de l'ensemble du frein d'immobilisation, le corps de l'étrier comporte une entrée de fluide sous pression tel que de l'air comprimé, reliée à une électrovalve de serrage et une électrovalve de desserrage qui sont fixées au corps de l'étrier et reliées à des chambres de pression délimitées respectivement par le piston de serrage et le piston de desserrage.

L'étrier de frein à disque destiné au système de frein d'immobilisation présente les caractéristiques qui viennent d'être explicitées.

D'autres buts, avantages et caractéristiques apparaîtront à la lecture de la description d'un mode de réalisation de l'invention, faite à titre non limitatif, et en regard du dessin annexé où:

- la figure 1    représente un mode de réalisation préféré du système de frein d'immobilisation selon l'invention, vu en coupe selon un plan passant radialement par le centre non représenté du disque de freinage et par l'axe de l'écrou de commande du frein; et

- la figure 2    représente le système de frein vu en coupe selon le plan II-II de la figure 1.

Le système de frein d'immobilisation représenté sur les figures comporte les éléments essentiels d'un frein à disque, à savoir un disque de frein 1 de faible épaisseur et un étrier de frein 2 qui chevauche la section transversale du disque 1 pour appliquer sur les pistes de frottement latérales 1a et 1b ménagées sur chaque face du disque, des garnitures de friction 3 et 4 portées par des supports métalliques respectifs 5 et 6. Les garnitures de friction sont ici constituées par un matériau élastomère qui présente deux caractéristiques inhabituelles pour une garniture de friction: une relativement grande compressibilité à l'état libre (non enserré dans un logement, auquel cas le comportement à la compression serait plutôt celui d'un liquide hydrostatique) et un coefficient de frottement très élevé, au moins au démarrage, c'est-à-dire dans la fonction même du frein d'immobilisation. Une autre propriété des garnitures de friction en élastomère qui se révèle très intéressante dans l'application à l'invention, à savoir leur usure très rapide en cas de rotation du disque, sera précisée par la suite.

Le support 5 de la garniture de friction fixe 3 est relié rigidement à l'une des branches 7 de l'étrier 2 à l'aide d'une vis 8 tandis que le support 6 de l'autre garniture 4 est rendu solidaire par une vis intérieure 9 d'une vis creuse 10 à filetage extérieur vissé dans un filetage intérieur 11 ménagé dans l'alésage 12 d'un écrou 13 de commande du frein. L'écrou 13 présente une partie extérieure cylindrique qui s'appuie par un palier de guidage et de butée 14 (par exemple à aiguilles) dans un alésage 15 du corps latéral 2a de l'étrier 2. Du côté opposé à la vis creuse 10, l'écrou 13 se prolonge par une queue 16 munie à sa périphérie d'une denture d'engrenage 17 et terminée par une portée de palier 18 en appui par l'intermédiaire d'un autre palier de butée et de guidage à aiguilles 19 sur une plaque de fermeture 20 fixée dans le corps d'étrier 2a. La portée de palier 18 se prolonge à l'extérieur du corps d'étrier 2a par une tête carrée 21 sur laquelle peut venir s'ajuster une manivelle d'actionnement manuel, non représentée.

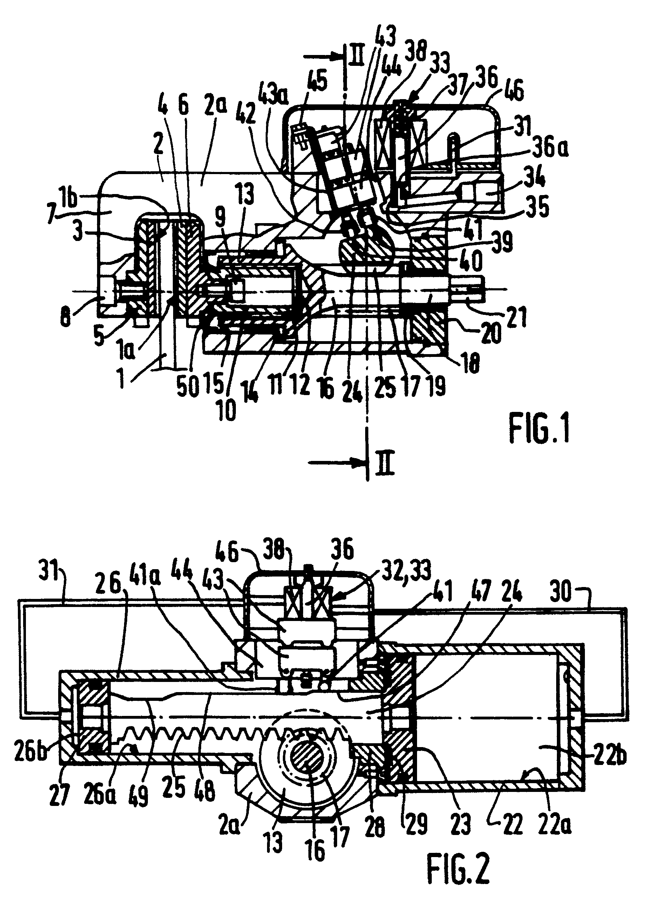

En se reportant à la figure 2, l'on voit que le corps d'étrier 2a est équipé de part et d'autre et transversalement à l'axe de l'écrou de commande 13 de deux vérins pneumatiques cylindriques rapportés sur des alésages d'entrée du corps 2a. Le cylindre 22 situé à droite de la figure est utilisé normalement pour le desserrage des freins et présente un alésage intérieur 22a dans lequel coulisse, de façon étanche grâce à une garniture d'étanchéité annulaire, un piston pneumatique 23 relié rigidement (par exemple par filetage) à une tige de crémaillère 24 qui porte à sa face inférieure une denture 25 engrenant avec la denture 17 de la queue 16. Le cylindre 26 disposé à gauche de la figure 2 et de plus petit diamètre que le cylindre de droite 22 présente un alésage intérieur 26a dans lequel coulisse de façon étanche grâce à une garniture d'étanchéité annulaire un piston 27 utilisé normalement pour le serrage du frein et relié rigidement, comme le grand piston 23, à la tige de crémaillère 24 qui est guidée à droite de la queue 16 par un palier 28. On remarque que le piston de desserrage 23 qui vient normalement en butée de fin de course vers la gauche de la figure, comporte une butée annulaire 29 qui vient en appui sur la face frontale du palier 28 en amortissant ainsi la fin de course de desserrage du piston 23. Comme le fait apparaître la figure 2, les pistons 23 et 27 constituent un moyen de guidage de la tige de crémaillère 24 combiné à la denture 17 de la queue 16, le palier 28 assurant un guidage axial complémentaire du côté du plus grand piston soumis aux efforts de pression les plus importants.

Les chambres pneumatiques 22b et 26b des cylindres 22 et 26, délimitées respectivement par les pistons de desserrage 23 et de serrage 27, sont reliées par des conduites respectives 30 et 31 à des électrovalves d'alimentation et de purge 32 et 33. On voit schématiquement en coupe sur la figure 1, l'électrovalve 33 de la conduite 31 qui est reliée par un raccord d'alimentation 34 à une source d'air comprimé et qui présente un siège de clapet 35 et un noyau magnétique 36 portant un clapet d'obturation 36a du siège 35. Le noyau 36 repoussé en position fermée par un ressort 37 peut être attiré par un bobinage électrique 38 de télécommande qui fait ainsi décoller le clapet 36a du siège 35 pour alimenter la conduite 31 en air comprimé à partir du raccord 34, tandis que la conduite 30 est mise à l'échappement par l'électrovalve 32.

Selon un aspect important du système de frein d'immobilisation permettant la télétransmission des informations de fonctionnement du frein, le dos de la tige de crémaillère 24, du côté opposé à la denture de crémaillère 25, porte deux rampes de came parallèles 39 et 40 (voir la figure 1) qui coopèrent avec des poussoirs 41 et 42 de contacteurs électriques 43 montés dans une ouverture 44 du corps d'étrier 2a audessus de la tige de crémaillère 24. Les contacteurs 43 sont fixés à une plaque support 43a accrochée sur le rebord de l'ouverture 44 par des vis 45. L'ensemble des contacteurs 43 et des électrovalves 32, 33 est recouvert après mise en place par un capotage étanche de protection 46.

La figure 2 indique schématiquement le profil de la rampe de came 39 qui présente une partie surélevée 47 coopérant avec le poussoir 41 pour repousser ce poussoir en position fermée d'un contacteur 43 indiquant le desserrage complet. Le poussoir 41a de l'un des contacteurs 43 est en contact avec un long profil de came rectiligne 48 qui se termine à proximité du piston de serrage 27 par un décrochement 49 en direction de l'axe de la tige de crémaillère 24.

Le fonctionnement du système de frein d'immobilisation ou de parc va maintenant être explicité. Lorsque le véhicule est libéré pour le roulage, la chambre pneumatique 22b est alimentée en air comprimé par l'électrovalve 32 et le piston de desserrage 23 est repoussé vers la gauche de la figure 2 dans la position représentée sur cette figure. La rampe de came 47 repousse le poussoir 41 de l'un des contacteurs 43 en position fermée et télécommande sur le voyant de frein d'immobilisation du train équipé du frein d'immobilisation selon l'invention, l'indication "frein d'immobilisation desserré". La garniture de friction 4 est rappelée par son support 6 à distance de la piste de friction 1a du disque 1 et le frein d'immobilisation est desserré. On remarque que le filetage de la vis creuse 10 ainsi que l'écrou de commande 13 et son palier 14 sont isolés de la zone des garnitures de friction 3, 4 et du disque de frein 1 qui pourraient projeter des particules bloquant les filetages, par un manchon d'étanchéité en élastomère 50.

Lorsque le conducteur du train désire actionner le frein d'immobilisation, il télécommande par voie électrique l'excitation des électrovalves 33 des divers freins d'immobilisation et la désexcitation des électrovalves 32, ce qui met à l'échappement les chambres 22b, alimente en air comprimé les chambres 26b et repousse la tige de crémaillère 24 vers la droite de la figure 2, en faisant tourner la queue 16 de l'écrou de commande 13 et également cet écrou 13 qui repousse par vissage irréversible la vis creuse 10 vers la gauche de la figure 1 en appliquant la garniture 4 sur la piste 1a du disque 1 et par réaction de l'étrier 2, la garniture de friction 3 sur la piste 1b du disque 1. Le déplacement de la tige de crémaillère 24 vers la droite de la figure 2 s'arrête lorsque, en fonction de l'usure des garnitures de friction 3 et 4, la réaction de ces garnitures est telle qu'elle arrête la progression de la vis creuse 10 vers la gauche de la figure 1 par blocage de la rotation de l'écrou de commande 13. Afin de faciliter la rotation de l'écrou 13 sur la vis 10, un lubrifiant tel que de la graisse est interposé entre les filetages conjugués et en prise de la vis 10 et de l'écrou 13. Le poussoir 41 est venu en appui sur la rampe 48 au dos de la tige de crémaillère 24 et le contacteur 43 correspondant affiche au tableau de frein d'immobilisation dans la cabine du conducteur l'indication: "frein d'immobilisation actionné".

Le disque 1 est disposé de préférence sur une partie de la transmission tournant à vitesse élevée, par exemple sur l'arbre de sortie du moteur de traction et un couple de freinage limité appliqué sur le disque 1 suffit ainsi à immobiliser le véhicule. De plus, comme indiqué précédemment, les garnitures de friction 3 et 4 en élastomère s'écrasent élastiquement en garantissant la persistance de l'effort d'application des freins et présentent un coefficient de frottement très élevé au démarrage du disque et qui correspond à une sorte de collage. Le conducteur qui abandonne le véhicule ou la rame de véhicules ferroviaires frein d'immobilisation serré, peut alors supprimer la pression d'air comprimé, le frein d'immobilisation se maintient du fait de l'irréversibilité du filetage de la vis 10 et de la course élastique emmagasinée au cours de l'écrasement élastique des garnitures de friction 3 et 4.

Au moment du desserrage du frein d'immobilisation, après un stationnement prolongé du véhicule, il peut se produire un coincement relatif des filetages coopérant de la vis creuse 10 et de l'écrou 13 et un collage des garnitures 3 et 4 sur les pistes de friction du disque 1. La section importante du piston de desserrage 23 permet de vaincre les coincements éventuels des filetages et des garnitures de friction 3 et 4 au moment de la remise sous pression de la chambre 22b.

Si pour une raison quelconque (coincement, manque d'air comprimé au desserrage, interruption du circuit électrique de commande, etc.), le frein d'immobilisation refuse de se desserrer complètement ou partiellement, ce qui apparaît au conducteur du fait que le poussoir 41 n'est pas repoussé par le profil de came 47, le conducteur du véhicule peut faire partir son véhicule frein d'immobilisation serré en utilisant la puissance du moteur d'entraînement et l'adhérence de la ou des roue(s) reliée(s) cinématiquement au disque de frein 1. En effet, le couple de friction maximal des garnitures 3 et 4 est inférieur au couple de traction ou d'adhérence normal. Dès le début de la rotation du disque 1, les garnitures en élastomère 3 et 4 commencent à fondre et la pression des garnitures 3 et 4 sur les pistes de friction 1a et 1b se relâche par fusion et abrasion d'une couche de matière à la surface de ces garnitures, car la rotation de serrage de l'écrou de commande 13 n'est alors pas entretenue. Le frein d'immobilisation se desserre ainsi rapidement sans user la totalité de l'épaisseur des garnitures 3 et 4 et sans risquer un blocage des roues par suite de l'addition intempestive, au cours d'un freinage subséquent, du frein d'immobilisation et du frein de service au voisinage de sa puissance maximale.

Après un tel desserrage forcé, le frein d'immobilisation peut à nouveau être appliqué par alimentation de la chambre 26b en air comprimé. En service normal, les garnitures de friction 3 et 4 qui sont appliquées uniquement pendant que le disque 1 ne tourne pas, ne s'usent pas. Une impossibilité de desserrage renouvelée provoque cependant une usure rapide des garnitures et cette usure anormale est affichée au tableau du frein d'immobilisation du fait que le poussoir 41a vient alors se placer en face du profil de came le plus en creux 49. La poursuite du freinage d'immobilisation risquerait d'appliquer les supports 5 et 6 directement au contact des pistes de friction 1a et 1b du disque 1 et de rayer ces pistes. En dépannage, il est alors possible d'isoler ou de rendre inactives les électrovalves de commande 32 et 33 et, le cas échéant, de faire tourner manuellement l'écrou 13 en serrage ou en desserrage en appliquant une manivelle ad hoc sur le carré d'actionnement 21 qui fait saillie à l'extérieur du corps d'étrier 2a.

Le système de frein d'immobilisation qui vient d'être décrit en application au freinage d'immobilisation d'un véhicule ferroviaire ou d'une rame de véhicules ferroviaires, notamment d'une rame de véhicules ferroviaires urbaine ou de transit rapide, permet la télécommande et la télésurveillance du frein d'immobilisation en utilisant des étriers de commande compact et contenant tous les équipements nécessaires au frein d'immobilisation et peut également être appliqué à des véhicules routiers lourds.

On a décrit ici un moteur d'actionnement du système de frein d'immobilisation selon l'invention où l'on utilise des vérins à l'air comprimé télécommandés par des électrovalves pour actionner l'écrou 13 au serrage et au déserrage et qui correspond à une application avantageuse pour les véhicules ferroviaires ou autres dotés d'une source d'air comprimé. L'air comprimé peut être remplacé par un autre fluide sous pression et, pour d'autres applications, on peut utiliser un moteur rotatif de serrage et/ou de desserrage, notamment un moteur électrique associé à un réducteur de vitesse à forte amplification de couple dont l'arbre de sortie est couplé directement à la queue 16, notamment par l'embout à section carrée 21. Le moteur électrique, par exemple à courant continu, peut également être télécommandé dans les deux sens de rotation pour assurer le serrage et le desserrage et on peut conserver un arbre d'actionnement manuel de secours, tel que l'arbre 21, qui permet également le recul des garnitures de friction pour procéder à leur échange après usure.

## Revendications

1. Système de frein destiné à l'immobilisation d'un véhicule et constitué d'un disque de frein (1) ou autre élément annulaire formant piste de friction, relié cinématiquement à au moins une roue du véhicule et entouré par un étrier de frein (2) qui est actionné par un ensemble vis-écrou (10,13) et qui chevauche la section radiale du disque en appliquant sur chacune des faces (12,15) de celui-ci une garniture de friction (3,4), l'une des garnitures de friction (4), immobilisée en rotation par rapport au disque (1) et mobile en direction de la piste de friction (1a) du disque (1), étant rendue solidaire d'une tige filetée (10) vissée, par une liaison de filetage irréversible, dans un écrou de commande (13) monté rotatif par l'intermédiaire d'au moins un palier (14, 19) à l'intérieur du corps d'étrier (2a), et un moteur de freinage (23, 27) étant relié mécaniquement à l'écrou de commande (13) pour l'entraîner en rotation dans le sens du serrage des freins, caractérisé en ce que le moteur de freinage (23, 27) est placé en position inactive après une opération de serrage des freins et est susceptible d'être actionné dans le sens du desserrage pour provoquer le desserrage des freins, de manière que ledit serrage se maintienne par l'effet de la liaison de filetage irréversible s'opposant au desserrage, aussi longtemps que le moteur de freinage n'a pas été actionné dans le sens du desserrage ou qu'un jeu dû à l'usure n'est pas apparu entre les garnitures de friction (3,4) et les pistes de friction (1a,1b) du disque de frein (1).

2. Système de frein destiné à l'immobilisation d'un véhicule selon la revendication 1, caractérisé en ce que le couple maximal d'entraînement susceptible d'être fourni par le moteur de freinage (23, 27) à l'écrou de commande (13) dans le sens du desserrage des freins est nettement supérieur à celui susceptible d'être fourni dans le sens du serrage des freins, de manière à vaincre un éventuel coincement au desserrage du frein d'immobilisation.

3. Système de frein destiné à l'immobilisation d'un véhicule selon l'une des revendications 1 ou 2, caractérisé en ce que le disque (1) est relié cinématiquement à la roue du véhicule par une transmission non susceptible de glissement et multipliant sa vitesse de rotation, de manière que la vitesse linéaire des pistes de friction (1a, 1b) du disque (1) soit nettement supérieure à la vitesse de rotation de la roue et que la force d'application des garnitures de friction sur les pistes de friction soit réduite.

4. Système de frein destiné à l'immobilisation d'un véhicule selon la revendication 1, caractérisé en ce qu'au moins l'une des garnitures de friction (3, 4) est réalisée en un matériau présentant une usure rapide en cas de rotation du disque de frein (1) pour supprimer ainsi rapidement le couple de freinage du frein d'immobilisation non desserré.

5. Système de frein destiné à l'immobilisation d'un véhicule selon la revendication 1, caractérisé en ce qu'au moins l'une des garnitures de friction (3, 4) est réalisée en un matériau tel qu'un élastomère présentant simultanément: une élasticité significative pour conserver l'effort d'application des freins après mise en position inactive du moteur de freinage (23, 27), un coefficient de friction élevé au moins à l'arrêt de la piste de friction du disque et une capacité d'usure très rapide en cas de rotation du disque (1) frein serré, de manière à faire disparaître rapidement le couple de freinage du frein d'immobilisation si celui-ci ne peut être desserré.

6. Système de frein destiné à l'immobilisation d'un véhicule selon la revendication 1, caractérisé en ce que d'une part, l'épaisseur des garnitures de friction (3, 4) et d'autre part, la course de serrage disponible, sont suffisantes pour permettre plusieurs opérations de roulage du véhicule frein d'immobilisation serré, jusqu'à la disparition quasi-totale du couple de freinage de ce frein par usure de ces garnitures, avant de devoir procéder à l'échange d'au moins l'une des garnitures de friction (3, 4).

7. Système de frein destiné à l'immobilisation d'un véhicule selon la revendication 1, caractérisé en ce que le couple de friction maximal qu'il provoque sur le disque de frein (1) est inférieur au couple d'entraînement de ce disque par l'adhérence sur leur chemin de roulement normal de la ou des roue(s) reliée(s) cinématiquement au disque, de manière à permettre le roulement forcé du véhicule en cas d'impossibilité de desserrer le frein.

8. Système de frein destiné à l'immobilisation d'un véhicule selon la revendication 1, caractérisé en ce que l'écrou de commande (13) est relié mécaniquement à des moyens d'actionnement manuels (21) aptes à desserrer et/ou serrer le frein d'immobilisation par rotation manuelle dudit écrou en cas de défaillance du moteur de freinage.

9. Système de frein destiné à l'immobilisation d'un véhicule selon la revendication 1, caractérisé en ce que l'écrou de commande (13) est un écrou borgne dont la tête est prolongée du côté opposé à la tige filetée (10) par une queue (16) munie à sa périphérie d'une denture d'engrenage (17) engrenant avec la denture (25) d'une crémaillère reliée par une tige de commande (24) à un piston de serrage (27) et à un piston de desserrage (23) délimitant des chambres à pression de fluide (26b, 22b) pour constituer un vérin de serrage (26) et un vérin de desserrage (22) susceptibles d'entraîner axialement la crémaillère (24, 25) dans le sens produisant respectivement le serrage ou le desserrage par rotation de l'écrou de commande (13) autour de la tige filetée (10) immobilisée en rotation par la garniture de friction (4) mais libre en translation.

10. Système de frein destiné à l'immobilisation d'un véhicule selon la revendication 9, caractérisé en ce que la queue (16) de l'écrou borgne (13) est en appui, au-delà de sa denture d'engrenage (17), dans un premier palier de rotation (19) ménagé dans le corps (2a) de l'étrier (2) tandis que la partie de l'écrou borgne (13) portant le filetage intérieur (11) vissé sur la tige filetée (10) est guidée par sa périphérie dans un deuxième palier de rotation (14) de plus grand diamètre que le premier (19) et ménagé dans le corps (2a) de l'étrier (2) du côté de la garniture de friction (4) solidaire de la tige filetée (10).

11. Système de frein destiné à l'immobilisation d'un véhicule selon la revendication 9, caractérisé en ce que le vérin de serrage et le vérin de desserrage comportent un piston unique mobile dans un alésage et relié à la crémaillère (24, 25) par une tige support traversant, de façon étanche, un alésage de guidage, le vérin de serrage étant délimité par la face du piston unique relié à la tige support et le vérin de desserrage étant délimité par l'autre face du piston unique, de manière à réaliser une section de piston de vérin plus importante au desserrage qu'au serrage.

12. Système de frein destiné à l'immobilisation d'un véhicule selon la revendication 9, caractérisé en ce que la crémaillère (24, 25) est solidaire, d'un côté, du piston de serrage (27) de petite section et mobile dans un alésage de serrage (26a) où il délimite la chambre de serrage (26b) du frein et, du côté opposé, d'un piston de desserrage (23) de plus grande section et mobile dans un alésage de desserrage (22a) où il délimite une chambre de desserrage (22b) du frein, en ce que les alésages de serrage (26a) et de desserrage (22a) constituent un moyen de guidage de la crémaillère (24, 25) combiné à un palier (28) ménagé entre le piston de desserrage (23) et la partie de la crémaillère munie de la denture (25) engrenant avec la denture périphérique (17) de l'écrou de commande (13) et en ce que les chambres de serrage (26b) et de desserrage (22b) sont susceptibles d'être reliées respectivement à une source de fluide sous pression et à l'échappement pour réaliser une opération de serrage du frein d'immobilisation et, alternativement, à l'échappement et à une source de fluide sous pression pour réaliser une opération de desserrage du frein d'immobilisation.

13. Système de frein destiné à l'immobilisation d'un véhicule selon la revendication 9, caractérisé en ce que le dos de la crémaillère (24, 25), du côté opposé à la denture (25) de cette crémaillère, porte au moins un profil de came axial (47, 48, 49) coopérant avec au moins un poussoir (41, 41a, 42) de contacteur électrique (43) permettant de télétransmettre des indications sur la course de la crémaillère (24, 25) correspondant notamment au desserrage du frein, à l'application du frein et à l'usure exagérée des garnitures de friction (3, 4).

14. Système de frein destiné à l'immobilisation d'un véhicule selon la revendication 9, caractérisé en ce que le corps (2a) de l'étrier (2) comporte une entrée de fluide sous pression (34) tel que de l'air comprimé, reliée à une électrovalve de serrage (33) et à une électrovalve de desserrage (32) qui sont fixées au corps (2a) de l'étrier (2) et reliées à des chambres de pression (26b, 22b) délimitées respectivement par le piston de serrage (27) et par le piston de desserrage (23).

15. Etrier de frein à disque destiné à un système de frein selon la revendication 1 et qui est actionné par un ensemble vis-écrou (10,13) pour appliquer sur chacune des faces (12,15) du disque une garniture de friction (3,4), caractérisé en ce que l'une des garnitures de friction (4) immobilisée en rotation par rapport au disque (1) et mobile en direction de la piste de friction (1a) du disque (1), est rendue solidaire d'une tige filetée (10) vissée, par une liaison de filetage irréversible, dans un écrou de commande (13) monté rotatif par l'intermédiaire d'au moins un palier (14, 19) à l'intérieur du corps d'étrier (2a), en ce qu'un moteur de freinage (23, 27) est relié mécaniquement à l'écrou de commande (13) pour l'entraîner en rotation alternativement dans le sens du serrage des freins et dans le sens du desserrage des freins, en ce que le moteur de freinage (23, 27) est susceptible d'être placé en position inactive au moins après une opération de serrage des freins, de manière que ledit serrage se maintienne par l'effet de la liaison de filetage irréversible s'opposant au desserrage aussi longtemps que le moteur de freinage n'a pas été actionné dans le sens du desserrage ou qu'un jeu dû à l'usure n'est pas apparu entre les garnitures de friction (3,4) et les pistes de friction (1a,1b) du disque de frein (1), et en ce qu'au moins l'une des garnitures de friction (3, 4) est réalisée en un matériau tel qu'un élastomère présentant simultanément: une élasticité significative pour conserver l'effort d'application des freins après mise en position inactive du moteur de freinage (23, 27), un coefficient de friction élevé au moins à l'arrêt de la piste de friction du disque et une capacité d'usure très rapide en cas de rotation du disque (1) frein serré, de manière à faire disparaître rapidement le couple de freinage du frein d'immobilisation si celui-ci ne peut être desserré.

**Claims**

1. Braking system for maintaining a vehicule stationary consisting of a brake disk (1) or a similar annular element constituting a frictional track kinematically linked to at least one vehicule wheel and surrounded by a brake caliper (2) which is operated by cooperating male and female threaded elements (10, 13) and which straddles the radial cross-section of the disk while applying to each one of the sides (12, 15) thereof a friction lining (3, 4), one of the friction linings (4) which is prevented from rotating with respect to the disk (1) and being movable in the direction of the friction track (1a) of said disk (1), being rendered integral with a threaded rod (10) that is screwed by means of an irreversible threaded connection into an operating nut (13) rotatably mounted by means of at least one bearing (14, 19) inside the body of said caliper (2a), and a braking motor (23, 27) mechanically linked to said operating nut (13) for rotatably driving it in the direction of application of the brakes, characterized in that the braking motor (23, 27) is set to a non-active position after a braking operation and is adapted to be driven in the direction of release of said brakes in order to cause the release thereof, whereby said braking action is maintained by the effect of said irreversible threaded connection that opposes said release as long as the braking motor has not been operated in said release direction or clearance resulting from wear has not appeared between said friction linings (3, 4) and the friction tracks (1a, 1b) of said brake disk (1).

2. Braking system for maintaining a vehicle stationary according to claim 1, characterized in that the maximum drive torque able to be supplied by the braking motor (23, 27) to said operating nut (13) in said direction of release of the brakes is distincly greater than the torque able to be applied in the direction of application of the brakes, in order to overcome possible jamming when releasing said brake.

3. Braking system for maintaining a vehicle stationary according to one of claims 1 or 2, characterized in that the disk (1) is kinematically linked to the vehicle wheel by a non-slipping transmission system that multiplies the speed of rotation thereof, whereby the linear velocity of the friction tracks (1a, 1b) of the disk (1) is distincly greater than the speed of rotation of the wheel and whereby the force with which said friction linings are applied to the friction tracks is reduced.

4. Braking system for maintaining a vehicle stationary according to claim 1, characterized in that at least one of said friction linings (3, 4) is made up by a material having rapid wear in the case of rotation of the brake disk (1) in order to thus rapidly eliminate braking torque should said brake for maintaining the vehicle stationary fail to release.

5. Braking system for maintaining a vehicle stationary according to claim 1, characterized in that at least one of said friction linings (3, 4) is provided in a material such as an elastomer simultaneously exhibiting: a significant degree of elasticity in order to maintain the brake application force after said brake motor (23, 27) has been set to the non-active position, a high coefficient of friction at least when said friction track is stationary, and a capability to wear very rapidly should said disk (1) rotate when the brake is applied in order to cause the braking torque of said brake for maintaining a vehicle stationary to rapidly disappear if release thereof is not possible.

6. Braking system for maintaining a vehicle stationary according to claim 1, characterized in that firstly, the thickness of said brake linings (3, 4) and, secondly the available brake application travel, are sufficient to allow several running operations of the vehicle with said brake for maintaining it stationary applied, up until the braking torque of said brake practically fully disappears through wear of said linings, before it becomes necessary to replace at least one of said friction linings (3, 4).

7. Braking system for maintaining a vehicle stationary according to claim 1, characterized in that the maximum frictional torque that results on said brake disk (1) is lower than the driving torque of said disk applied thereto through adherence to their normal rolling path of the wheel or wheels that are kinematically linked to said disk, in order to allow forced rolling of said vehicle should it be impossible to release said brake.

8. Braking system for maintaining a vehicle stationary according to claim 1, characterized in that said operating nut (13) is mechanically linked to manual operating means (21) adapted to apply and/or release said brake by manual rotation of said nut should said braking motor fail.

9. Braking system for maintaining a vehicle stationary according to claim 1, characterized in that said operating nut (13) is a blind nut the head of which is extended at the end thereof directed away from said threaded rod (10) by a tail portion (16) having at the periphery thereof a gear toothing (17) that engages with the gear toothing (25) of a rack linked by a control rod (24) to a brake-application piston (27) and to a brake-release piston (23) bounding fluid pressure chambers (26b, 22b) in order to constitute a brake-application cylinder (26) and a brake-release cylinder (22) adapted to axially drive said rack (24, 25) in directions respectively producing application or release of said brake by rotation of said operating nut (13) around the threaded rod (10) that is rotationally immobilised by said friction lining (4) but is free to perform translatory movement.

10. Braking system for maintaining a vehicle stationary according to claim 9, characterized in that said tail portion (16) of the blind nut (13) is supported, beyond the gear toothing (17) thereof, on a first rotational bearing (19) provided in the body (2a) of the caliper (2), while the portion of said blind nut (13) carrying the inside thread (11) screwed onto the said threaded rod (10) is guided at the periphery thereof by a second rotational bearing (14) of larger diameter than said first bearing (19) and provided in the body (2a) of the caliper (2) at the side of said friction lining (4) that is integral with said threaded rod (10).

11. Braking system for maintaining a vehicle stationary according to claim 9, characterized in that said brake-application and brake-release cylinders each include a single piston movable in a bore and linked to said rack (24, 25) by a support rod that passes in a sealed manner through a guide hole, said brake-application cylinder being bounded by the side of the single piston linked to said support rod, and said brake-release cylinder being bounded by the other side of said single piston in order to provide a piston cross section of said piston-cylinder arrangement that is larger during brake release than during brake application.

12. Braking system for maintaining a vehicle stationary according to claim 9, characterized in that the rack-and-pinion gear is integral at one end thereof with said smaller cross-section brake-application piston (27) that is movable in a brake-application passage (26a) in which it defines the brake application chamber (26b) and, at the opposite end thereof, with a brake-release piston (23) of larger cross section that is movable in a brake-release bore (22a) in which it defines a brake-release chamber (22b), and in that the brake-application (26a) and brake-release (22a) bores constitute a guiding means for said rack (24, 25) combined with a bearing (28) provided between the brake release piston (23) and the portion of said rack provided with the gear toothing (25) that engages with the peripheral gear toothing (17) of said operating nut (13) and in that the brake-application (26b) and brake-release (22b) chambers are adapted to be linked respectively to a source of pressurized fluid and to a pressure release line in order to perform brake application for rendering a vehicle stationary and, alternatively, to said pressure release line and to a source of pressurized fluid in order to carry out release of said brake for maintaining a vehicle stationary.

13. Braking system for maintaining a vehicle stationary according to claim 9, characterized in that the rear side of said rack (24, 25) that is directed away from the gear toothing (25) thereof, bears at least one axial cam contour (47, 48, 49) that cooperates with at least one push rod (41, 41a, 42) of an electric switch (43) enabling indications relating to the travel of said rack (24, 25) corresponding notably to release of said brake, to the application thereof, and to excessive wear of said friction linings (3, 4) to be transmitted to a remote location.

14. Braking system for maintaining a vehicle stationary according to claim 9, characterized in that the body (2a) of the caliper (2) includes an inlet for pressurized fluid (34) such as compressed air, linked to a brake-application solenoid valve (33) and a brake-release solenoid valve (32) which are secured to the body (2a) of said caliper (2) and which communicate with pressure chambers (26b, 22b) respectively bounded by said brake-application piston (27) and said brake-release piston (23).

15. Disk brake caliper for a braking system for maintaining a vehicle stationary according to claim 1 and which is operated by cooperating male and female threaded members (10, 13) for applying a friction lining (3, 4) to each of the sides (12, 15) of the disk, characterized in that one of said friction linings (4) which is prevented from rotating with respect to said disk (1) and is movable in the direction of the friction track (1a) of said disk (1), is rendered integral with a threaded rod (10) which is screwed, by means of an irreversible threaded connection, into an operating nut (13) rotatably mounted by means of at least one bearing (14, 19) inside said caliper body (2a), in that a braking motor (23, 27) is mechanically linked to said operating nut (13) in order to alternatively drive it in the brake-application direction or the brake-release direction, and in that the braking motor (23, 27) is adapted to be set to an inactive position at least after a brake-application operation whereby said brake-application is maintained by the irreversible threaded connection opposing said release as long as said braking motor has not been operated in the brake-release direction or as long as clearance resulting from wear has not appeared between the friction linings (3, 4) and the friction tracks (1a, 1b) of the brake disk, and in that at least one of the friction linings (3, 4) is made of a material such as an elastomer simultaneously having: a significant degree of elasticity in order to maintain the brake application force after said brake motor (23, 27) has been set to the non-active position, a high coefficient of friction at least when said friction track of the disk is stationary and a capability to wear very rapidly should said disk (1) rotate when the brake is applied in order to cause the braking torque of said brake for maintaining a vehicle stationary to rapidly disappear if release thereof is not possible.

**Patentansprüche**

1. Bremssystem zur Festlegung eines Fahrzeugs, mit einer Bremsscheibe (1) oder einem anderen, eine Reibungsbahn bildenden ringförmigen Element, das kinetisch mit wenigstens einem Rad des Fahrzeugs verbunden ist und von einem Bremssattel (2) umgriffen wird, dessen Betätigung durch einen Schrauben-und-Mutter-Mechanismus (10, 13) erfolgt und der die Scheibe radial übergreift, um an jede Seite Oberfläche (12, 15) der Scheibe einen Reibungsbelag (3, 4) anzudrücken, wobei einer der Beläge (4) in bezug auf die Scheibe (1) drehfest und in Richtung der Reibungsbahn (1a) der Scheibe (1) beweglich angeordnet und durch eine Einweggewindeverbindung mit einer Gewindestange (10), die mit einem vermittels wenigstens eines Lagers (14, 19) im Inneren des Sattelkörpers drehbar angeordneten Betätigungsmutter (13) zusammenwirkt, während ein Bremsmotor (23, 27) mechanisch mit der Betätigungsmutter (13) verbunden ist, um die letztere im der Bremsbetätigung entsprechenden Drehsinn zu drehen, dadurch gekennzeichnet, dass der Bremsmotor (23, 27) nach der Bremsbetätigung ausgeschaltet wird und im Sinne der Bremsen betätigbar ist, um die Bremsen zu lösen, derart, dass die Bremsbetätigung durch die Wirkung der Einweggewindeverbindung, die der Bremslösung entgegenwirkt, solange aufrecht erhalten wird, wie der Bremsmotor nicht im Sinne der Bremsen betätigt wird, und solange kein Verschleiss-Spiel zwischen den Reibungsbelägen (3, 4) und den Reibungsbahnen (1a, 1b) der Bremsscheibe (1) auftritt.

2. Bremssystem nach Anspruch 1, zur Festlegung eines Fahrzeugs, dadurch gekennzeichnet, dass das maximale Drehmoment, das vom Bremsmotor (23, 27) auf die Betätigungsmutter (13) im den Bremslösen entsprechenden Drehsinn übertragbar ist, wesentlich höher ist, als das im der Bremsbetätigung entsprechenden Drehsinn übertragbare maximale Drehmoment, derart, dass beim Lösen der Festlegungsbremse ggf. auftretende Klemmungen überwunden werden.

3. Bremssystem nach Anspruch 1 oder 2 zur Festlegung eines Fahrzeugs, dadurch gekennzeichnet, dass die Scheibe (1) über einen schlupffreien, die Drehgeschwindigkeit erhöhenden Übertragungsmechanismus mit dem Rad des Fahrzeugs kinetisch wirkverbunden ist, so dass die lineare Geschwindigkeit der Reibungsbahnen (1a, 1b) der Scheibe (1) wesentlich höher ist, als die Drehgeschwindigkeit des Rades und die Andrückkraft der Reibungsbeläge an die Reibungsbahnen vermindert ist.

4. Bremssystem nach Anspruch 1 zur Festlegung eines Fahrzeugs, dadurch gekennzeichnet, dass wenigstens einer der Reibungsbeläge (3, 4) aus einem Material besteht, das bei Drehung der Bremsscheibe (1) einen hohen Verschleiss erleidet, um auf diese Weise das Bremsmoment der nicht gelösten Festlegungsbremse schnell zu vernichten.

5. Bremssystem nach Anspruch 1 zur Festlegung eines Fahrzeugs, dadurch gekennzeichnet, dass wenigstens einer der Reibungsbeläge (3, 4) aus einem elastomeren Material besteht, das folgende Eigenschaften aufweist: das Material ist hinreichend elastisch, um die Andrückkraft der Bremsen nach dem Anhalten des Bremsmotors (23, 27) aufrecht zu erhalten, das Material besitzt ferner mindestens bei Stillstand der Reibungsbahn der Bremsscheibe einen hohen Reibungskoeffizienten, sowie die Fähigkeit, bei Drehung der Bremsscheibe (1) sehr schnell zu verschleissen, um das Bremsmoment der Festlegungsbremse schnell zu vernichten, wenn dieselbe nicht gelöst werden kann.

6. Bremssystem nach Anspruch 1 zur Festlegung eines Fahrzeugs, dadurch gekennzeichnet, dass einerseits die Dicke der Reibungsbeläge (3, 4) und andererseits der verfügbare Betätigungshub hinreichen, um es dem Fahrzeug zu gestatten, mehrere Strecken mit angezogener Festlegungsbremse zu durchlaufen, bis zum annähernd völligen Verschwinden des Bremsmomentes dieser Bremse durch Verschleiss der genannten Beläge, bevor es erforderlich ist, wenigstens einen der Reibungsbeläge (3, 4) auszuwechseln.

7. Bremssystem nach Anspruch 1 zur Festlegung eines Fahrzeugs, dadurch gekennzeichnet, dass das maximale an der Bremsscheibe (1) erzeugte Reibungsmoment kleiner ist, als das die Scheibe antreibende Drehmoment infolge des Haftens des (der) mit der Scheibe kinetisch verbundenen Rades (Räder) auf der betreffenden, normalen Rollbahn desselben (derselben), derart, dass eine Zwangswälzbewegung des Fahrzeugs ermöglicht ist, wenn die Bremse nicht gelöst werden kann.

8. Bremssystem nach Anspruch 1 zur Festlegung eines Fahrzeugs, dadurch gekennzeichnet, dass die Betätigungsmutter (13) mechanisch mit Handbetätigungsmitteln (21) wirkverbunden ist, vermittels welcher im Falle eines Versagens des Bremsmotors die Festlegungsbremse durch eine von Hand erzeugte Drehbewegung betätigbar bzw. lösbar ist.

9. Bremssystem nach Anspruch 1 zur Festlegung eines Fahrzeugs, dadurch gekennzeichnet, dass das Betätigungsmutter (13) eine Hutmutter ist, deren Kopf an der der Gewindespindel (10) abgewandte Seite durch einen an seinem Umfang mit einer Verzahnung (17) versehenen Ansatz (16) verlängert wird, welche Verzahnung (17) mit der Verzahnung einer Zahnstange in Eingriff kommt, wobei die Zahnstange durch eine Steuerstange (24) mit einem Betätigungskolben (27) und einem Lösekolben (23) verbunden ist, welch letztere Fluiddruckkammern (26b, 22b) begrenzen, um somit einen Bremsbetätigungszylinder (26) und einen Bremslösezylinder (22) zu bilden, die die Zahnstange (24, 25) axial in einer dem Anziehen bzw. dem Lösen der Bremse durch Drehung der Betätigungsmutter (13) um die Gewindespindel (10) hervorrufen, die durch den Reibungsbelag (4) drehfest, jedoch verschiebbar gelagert ist.

10. Bremssystem nach Anspruch 9 zum Festlegen eines Fahrzeugs, dadurch gekennzeichnet, dass der Ansatz (16) der Hutmutter (13) jenseits der Verzahnung (17) in einem ersten Drehlager (19) am Körper des Bremssattels (2) gelagert ist, wobei der das auf die Gewindespindel (10) aufgeschraubte Innengewindeteil aufweisende Abschnitt der Hutmutter (13) an seinem Umfang vermittels eines zweiten Drehlagers (14) gelagert ist, dessen Durchmesser grösser ist, als derjenige des ersten Lagers (19) und welches im Bremssattelkörper (2a) auf derjenigen Seite der Reibungsgarnitur (4) angeordnet ist, die von der Gewindespindel (10) beaufschlagt wird.

11. Bremssystem nach Anspruch 9 zur Festlegung eines Fahrzeugs, dadurch gekennzeichnet, dass der Bremsbetätigungszylinder und der Lösezylinder einen in einer Bohrung bewegbaren einzigen Kolben aufweisen, der durch eine dicht in einer Führungsbohrung angeordnete Tragstange mit der Zahnstange (24, 25) verbunden ist, wobei der Bremsbetätigungszylinder durch die mit der Haltestange verbundene Seite des einzigen Kolbens und der Lösezylinder durch die andere Seite des einzigen Kolbens begrenzt werden, derart, dass zum Lösen der Bremse eine grössere Kolbenoberfläche verfügbar ist, als zur Bremsbetätigung.

12. Bremssystem nach Anspruch 9 zur Festlegung eines Fahrzeugs, dadurch gekennzeichnet, dass die Zahnstange (24, 25) an einem ihrer Enden mit dem Bremsbetätigungskolben (27) verbunden ist, der eine verhältnismässig kleine Querschnittoberfläche besitzt und in einer Bremsbetätigungsbohrung (26a) beweglich angeordnet ist, wo er eine Bremsbetätigungskammer (26b) begrenzt, während die Zahnstange an ihrem anderen Ende mit einem Bremslösekolben (23) verbunden ist, der einen verhältnismässig grossen Querschnitt besitzt und in einer Bremslösebohrung (22a) beweglich angeordnet ist, wo er eine Bremslösekammer (22b) begrenzt; sowie dadurch, dass die Bremsbetätigungs- und Lösebohrungen (26a, 22a) ein Führungsmittel für die Zahnstange (24, 25) bilden in Verbindung mit einem Lager (28), das zwischen dem Bremslösekolben (23) und dem mit der Verzahnung versehenen Zahnstangenteil angeordnet ist, welcher mit der Umfangsverzahnung (17) der Betätigungsmutter (23) eingreift; und dadurch, dass die Bremsbetätigungskammer (26b) und die Bremslösekammer (22b) jeweils mit einer Fluiddruckquelle bzw. mit dem Auslass verbindbar sind, um das Anziehen der Festlegungsbremse zu bewirken, oder umgekehrt an dem Auslass bzw. an die Druckquelle anschliessbar sind, um das Lösen der Festlegungsbremse zu bewirken.

13. Bremssystem nach Anspruch 9 zur Festlegung eines Fahrzeugs, dadurch gekennzeichnet, dass die der Verzahnung (25) der Zahnstange (24, 25) abgewandte Rückseite der letzteren wenigstens ein axiales Nockenprofilstück (47, 48, 49) aufweist, das mit wenigstens einem Stössel (41, 41a, 42) eines elektrischen Schalters (43) zusammenwirkt, derart, dass auf Distanz Angaben betreffs des Hubs der Zahnstange (24, 25), insbesondere in bezug auf das Lösen und das Anziehen der Bremse, sowie in bezug auf übermässigen Verschleiss der Reibungsbeläge (3, 4) übermittelt werden können.

14. Bremssystem nach Anspruch 9 zur Festlegung eines Fahrzeugs, dadurch gekennzeichnet, dass der Körper (2a) des Bremssattels (2) einen Einlass für ein Druckmittel (34), wie Druckluft, aufweist, der an ein Bremsbetätigungselektroventil (33) und an ein Bremslösenelektroventil (32) angeschlossen ist, wobei die Elektroventile an dem Körper (2a) des Bremssattels (2) befestigt und mit Druckkammern (26b, 26c), welche durch den Bremsbetätigungskolben (27) bzw. den Bremslösekolben (23) begrenzt sind, verbunden sind.

15. Scheibenbremssattel für ein Bremssystem nach Anspruch 1, das durch einen Schrauben- und Muttermechanismus (10, 13) betätigt wird, um an jede der Oberflächen (12, 15) der Bremsscheibe einen Reibungsbelag (3, 4) anzudrücken, dadurch gekennzeichnet, dass einer der genannten Reibungsbeläge (4), der in bezug auf die Bremsscheibe (1) drehfest, aber in Richtung der Reibungsbahn (1a) der Scheibe (1) beweglich angeordnet ist, fest verbunden ist mit einer Gewindespindel (10), die durch Einwegverschraubung mit einer Betätigungsmutter (13) verbunden ist, welche vermittels wenigstens eines Lagers (14, 19) in Bremssattelkörper (2a) drehbar gelagert ist; sowie dadurch, dass ein Bremsmotor (23, 27) mechanisch mit der Betätigungsmutter (13) verbunden ist, um dieselbe abwechselnd im Sinne des Anziehens und des Lösens der Bremsen zu drehen; ferner dadurch, dass der Bremsmotor (23, 27) wenigstens nach einem Anziehen der Bremsen in eine Stellung gebracht werden kann, in der er unwirksam ist, sodass die Bremse angezogen bleibt durch die Wirkung der Einwegverschraubung, die einem Bremslösen solange entgegenwirkt, wie der Bremsmotor nicht im Sinne des Bremslösens betätigt wird oder solange, wie kein Spiel durch Verschleiss zwischen den Reibungsbelägen (3, 4) und den Reibungsbahnen (1a, 1b) der Bremsscheibe (1) auftritt; und dadurch, dass wenigstens einer der Reibungbeläge (3, 4) aus einem Material wie Elastomer gefertigt ist, das folgende Eigenschaften besitzt: eine erhebliche Elastizität, um die Bremsbetätigungskraft aufrecht zu erhalten, wenn der Bremsmotor (23, 27) in seine unwirksame Stellung gebracht wird, einen hohen Reibungskoeffizienten wenigstens bei Stillstand der Reibungsbahn der Bremsscheibe, sowie ein sehr hohes Verschleissvermögen wenn die Bremsscheibe (1) sich bei angezogener Bremse dreht, derart, dass das Bremsmoment der Festlegungsbremse schnell vernichtet wird, wenn die Bremse nicht gelöst werden kann.

FIG.1

FIG.2